# EUROPÄISCHE PATENTANMELDUNG

(11) **EP 2 963 803 A1**
(43) Veröffentlichungstag der Anmeldung: **06.01.2016**
(21) Anmeldenummer: 14175213.9
(22) Anmeldetag: 01.07.2014
(51) Int. Cl.: H02P 9/30

(54) **Versorgung einer Synchronmaschine mit einem Erregerstrom**

(71) Anmelder: Siemens Aktiengesellschaft, 80333 München (DE)
(72) Erfinder: Michelsson, Olaf, 99310 Arnstadt (DE); Banda, Marcus, 99084 Erfurt (DE); Hiller, Martin, 99097 Erfurt (DE)

(57) **Zusammenfassung**

Die Erfindung betrifft eine Regeleinrichtung für ein bürstenloses Erregersystem zum Versorgen von wenigstens einer Erregerwicklung eines Läufers einer Synchronmaschine, insbesondere eines Turbogenerators, mit einem Erregerstrom, aufweisend:
- wenigstens eine zum Erfassen einer Stärke eines zwischen einem Läufer und einem Ständer einer Haupterregermaschine erzeugten magnetischen Flusses oder wenigstens eines mit diesem magnetischen Fluss verbundenen Parameters eingerichtete Erfassungseinrichtung;
- wenigstens eine zwischen eine Hilfserregermaschine und die Haupterregermaschine schaltbare Regeleinheit, die zum Erzeugen eines der Haupterregermaschine zuführbaren Hilfserregergleichstroms durch Gleichrichten eines von der Hilfserregermaschine erzeugten Hilfserregerdrehstroms eingerichtet ist und die eingerichtet ist, die Stromstärke des Hilfserregergleichstroms derart zu regeln, dass ein zwischen dem Läufer und dem Ständer der Haupterregermaschine erzeugter magnetischer Fluss unabhängig von der Stromstärke des der Erregerwicklung des Läufers der Synchronmaschine zuführbaren Erregerstroms konstant gehalten wird; und
- wenigstens eine drehfest mit einer Läuferwelle der Synchronmaschine verbundene, zwischen den Läufer der Haupterregermaschine und die Erregerwicklung des Läufers der Synchronmaschine geschaltete Stelleinheit, die zum Erzeugen des Erregerstroms durch Gleichrichten einer von der Haupterregermaschine erzeugten Erregerdrehspannung und zum Regeln der Stromstärke des dem Läufer der Synchronmaschine zuführbaren Erregerstroms eingerichtet ist.

## Beschreibung

Die Erfindung betrifft ein Erregersystem zum Versorgen von wenigstens einer Erregerwicklung eines Läufers einer Synchronmaschine, insbesondere eines Turbogenerators, mit einem Erregerstrom.

Des Weiteren betrifft die Erfindung ein bürstenloses Erregersystem zum Versorgen von wenigstens einer Erregerwicklung eines Läufers einer Synchronmaschine, insbesondere eines Turbogenerators, mit einem Erregerstrom.

Ferner betrifft die Erfindung ein Verfahren zum Versorgen von wenigstens einer Erregerwicklung eines Läufers einer Synchronmaschine, insbesondere eines Turbogenerators, mit einem Erregerstrom.

Synchronmaschinen in Form von Turbogeneratoren werden in Kraftwerken zum Erzeugen von elektrischer Energie eingesetzt. Hierzu ist ein Turbogenerator mechanisch mit wenigstens einer Gasturbine und/oder Dampfturbine gekoppelt, wobei der Turbogenerator zusammen mit der Gasturbine bzw. Dampfturbine einen Turbosatz bildet. Alternativ kann eine Synchronmaschine ohne eine entsprechende Kopplung an eine Turbine in einem Phasenschieberbetrieb betrieben werden.

Bei einem Turbogenerator wird ein für die Erzeugung einer Generatorspannung erforderliches magnetisches Erregergleichfeld durch Erregerwicklungen im Läufer des Turbogenerators erzeugt.

Zur Versorgung der Erregerwicklungen eines Läufers eines Turbogenerators kann ein statisches Erregersystem eingesetzt werden. Bei einem statischen Erregersystem wird über einen stationären Stromrichter, stationäre Kohlebürsten und an einer Läuferwelle des Turbogenerators angeordneten Schleifringen eine Erregerleistung zu den Erregerwicklungen des Läufers des Turbogenerators übertragen. Diese statische Erregung kann sehr schnell auf Lastwechsel reagieren, was mit einem regelungstechnischen Geschwindigkeitsvorteil gegenüber bürstenlosen Erregersystemen einhergeht. Dieser regelungstechnischen Geschwindigkeitsvorteil kommt heute stark zum Tragen, da sich im Zuge einer globalen Energiewende die Einspeiseeinheiten von Großkraftwerken zum Einspeisen von elektrischer Energie in Versorgungsnetze hin zu kleineren dezentralen regenerativen Energieerzeugern verändern und somit mehr Dynamik in den Versorgungsnetzen generieren. Jedoch gilt ein statisches Erregersystem aufgrund eines regelmäßig notwendigen Austauschs der Kohlebürsten als wartungsintensiv. Weiterhin wird die Versorgungsspannung eines statischen Erregersystems vorwiegend von den Generatorklemmen abgenommen, so dass während eines Netzfehlers im ungünstigsten Fall keine Deckenspannung an die Erregerwicklungen des Turbogenerators geliefert werden kann.

Alternativ kann zur Versorgung der Erregerwicklungen eines Turbogenerators ein bürstenloses Erregersystem eingesetzt werden. Bei einem bürstenlosen Erregersystem werden die Erregerwicklungen des Läufers des Turbogenerators über einen mit dem Läufer mitrotierenden Diodengleichrichter mit den Wechselstromwicklungen eines Läufers einer als Außenpolmaschine ausgebildeten Haupterregermaschine verbunden. Die Außenpolwicklungen der Haupterregermaschine werden über einen Spannungsregler aus einer permanenterregten Hilfserregermaschine gespeist. Auf den wartungsintensiven Einsatz von Bürsten kann völlig verzichtet werden, wodurch ein bürstenloses Erregersystem als nahezu wartungsfrei gilt. Zudem ist eine bürstenlose Erregung im Gegensatz zur statischen Erregung in der Lage, im Fall eines Netzfehlers in einem Versorgungsnetz weiterhin die volle Leistung an die Erregerwicklungen des Läufers eines Turbogenerators zu liefern. Ein Nachführen eines die Erregerwicklungen des Läufers eines Turbogenerators versorgenden Erregerstroms bei schnellen Laständerungen im angeschlossenen Versorgungsnetz erfolgt im Vergleich zur statischen Erregung aufgrund der großen Erregerzeitkonstante eines bürstenlosen Erregersystems sehr viel langsamer. Den durch den starken Zuwachs regenerativer Energieerzeuger in den Versorgungsnetzen bedingten stetig steigenden Minimalanforderungen der Netzbetreiber an alle Einspeiseeinheiten bezüglich einer Dynamik bei Lastwechseln, der Spannungshaltung im Versorgungsnetz sowie bei kurzzeitigen Störungen werden Turbogeneratoren mit bürstenloser Erregung immer weniger gerecht. Die von einer Erregermaschine erzeugte Erregerleistung beträgt üblicherweise etwa 0,5% bis etwa 5% der Bemessungsscheinleistung eines Turbogenerators.

Aufgabe der Erfindung ist es, die Vorteile der statischen Erregung mit den Vorteilen der bürstenlosen Erregung zu verbinden.

Die erfindungsgemäße Regeleinrichtung für ein bürstenloses Erregersystem zum Versorgen von wenigstens einer Erregerwicklung eines Läufers einer Synchronmaschine, insbesondere eines Turbogenerators, mit einem Erregerstrom, umfasst:
- wenigstens eine zum Erfassen einer Stärke eines zwischen einem Läufer und einem Ständer einer Haupterregermaschine erzeugten magnetischen Flusses oder wenigstens eines mit diesem magnetischen Fluss verbundenen Parameters eingerichtete Erfassungseinrichtung;
- wenigstens eine zwischen eine Hilfserregermaschine und die Haupterregermaschine schaltbare Regeleinheit, die zum Erzeugen eines der Haupterregermaschine zuführbaren Hilfserregergleichstroms durch Gleichrichten eines von der Hilfserregermaschine erzeugten Hilfserregerdrehstroms eingerichtet ist und die eingerichtet ist, die Stromstärke des Hilfserregergleichstroms derart zu regeln, dass ein zwischen dem Läufer und dem Ständer der Haupterregermaschine erzeugter magnetischer Fluss unabhängig von der Stromstärke des der Erregerwicklung des Läufers der Synchronmaschine zuführbaren Erregerstroms konstant gehalten wird; und
- wenigstens eine drehfest mit einer Läuferwelle der Synchronmaschine verbundene, zwischen den Läufer der Haupterregermaschine und die Erregerwicklung des Läufers der Synchronmaschine geschaltete Stelleinheit, die zum Erzeugen des Erregerstroms durch Gleichrichten einer von der Haupterregermaschine erzeugten Erregerdrehspannung und zum Regeln der Stromstärke des dem Läufer der Synchronmaschine zuführbaren Erregerstroms eingerichtet ist.

Ein mit einer erfindungsgemäßen Regeleinrichtung versehenes bürstenloses Erregersystem kann aufgrund der Stelleinheit bzw. der dadurch bewirkten indirekten Regelung der Stromstärke des dem Läufer der Synchronmaschine zuführbaren Erregerstroms entsprechend statischen Erregersystemen sehr schnell auf Lastwechsel reagieren, was mit dem regelungstechnischen Geschwindigkeitsvorteil verbunden ist. Hierzu muss eine aktive Gleichrichtung auf der Läuferwelle implementiert sein. Insbesondere können mittels der Stelleinheit positive und negative Erregerspannungen erzeugt werden, wobei mittels negativer Erregerspannungen eine schnelle Entregung der Erregerwicklung des Läufers der Synchronmaschine erfolgen kann. Hierdurch kann das Konzept der bürstenlosen Erregung erheblich erweitert und verbessert werden. Mit der erfindungsgemäßen Regeleinrichtung kann folglich ein Regelverhalten und eine Stabilität einer Synchronmaschine verbessert werden, um im Allgemeinen gestiegene Minimalanforderungen der Netzbetreiber an mit einem Versorgungsnetz verbundene Einspeiseeinheiten zu erfüllen, wodurch eine globale Energiewende unterstützt werden kann.

Eine Minimalanforderung an Einspeiseeinheiten ist beispielsweise eine Forderung bezüglich Referenz-Spannungssprüngen im Leerlauf einer Synchronmaschine von 1 pu auf 0,9 pu innerhalb von oftmals beschriebenen 800 ms für bürstenlose Erregeranlagen bei niedrigen Temperaturen. Ohne eine aktive Entregung einer Synchronmaschine bzw. der Erregerwicklung ihres Läufers, wie es bei herkömmlichen bürstenlosen Erregersystemen der Fall ist, sind derartige Forderungen für große luftgekühlte Synchronmaschinen kaum realisierbar. Mittels der erfindungsgemäßen Regeleinrichtung kann hingegen eine geeignete Entregung der Synchronmaschine erfolgen. Im Falle von plötzlichen Lastabsenkungen in einem Versorgungsnetz ist es zudem erforderlich, eine entstehende Überspannung möglichst schnell auszuregeln, was mittels der Stelleinheit der erfindungsgemäßen Regeleinrichtung möglich ist. Zudem ist es notwendig, zur Erhaltung der Stabilität einer Synchronmaschine während eines Netzfehlers im Versorgungsnetz eine Synchronmaschine im Moment der Netzspannungsrückkehr nach entsprechenden Minimalanforderungen der Netzbetreiber an Einspeiseeinheiten in 200 ms bis 250 ms in maximaler Überregung zu fahren, was ebenfalls mittels der erfindungsgemäßen Regeleinrichtung bzw. deren Stelleinheit möglich ist. Um möglichst schnell in diesen Zustand der maximalen Überregung zu gelangen, bedarf es einer möglichst kleinen Erregerzeitkonstante, welche durch eine Verwendung der erfindungsgemäßen Regeleinrichtung erreicht werden kann.

Durch den erfindungsgemäßen Einsatz der Stelleinheit bzw. deren Funktionalitäten - statt der herkömmlichen Verwendung von passiven bzw. nicht steuerbaren Gleichrichtereinheiten in Kombination mit einer direkt über eine Bestromung einer Haupterregermaschine erfolgenden Erregung einer Erregerwicklung des Läufers einer Synchronmaschine - ist es für eine Regelung der Stromstärke des dem Läufer der Synchronmaschine zuführbaren Erregerstroms von Vorteil, wenn eine von der Haupterregermaschine erzeugte Erregerdrehspannung eine konstante Höhe aufweist. Dies kann mittels der Regeleinheit der erfindungsgemäßen Regeleinrichtung erreicht werden, mit der hierzu die Stromstärke des der Haupterregermaschine zuführbaren Hilfserregergleichstroms derart geregelt wird, dass ein zwischen dem Läufer und dem Ständer der Haupterregermaschine erzeugter magnetischer Fluss unabhängig von der Stromstärke des der Erregerwicklung des Läufers der Synchronmaschine zuführbaren Erregerstroms konstant gehalten wird. Durch das Konstanthalten des magnetischen Flusses wird die Höhe der von der Haupterregermaschine erzeugten Erregerdrehspannung konstant gehalten.

Mittels der erfindungsgemäßen Regeleinrichtung können die herkömmlichen Vorteile der bürstenlosen Erregung somit mit den Vorteilen einer statischen Erregung, insbesondere deren Regelungsvorteilen, verbunden werden.

Die Erfassungseinrichtung kann direkt die Stärke des magnetischen Flusses zwischen dem Läufer und dem Ständer einer Haupterregermaschine messen. Alternativ kann mittels der Erfassungseinrichtung wenigstens ein mit diesem magnetischen Fluss verbundener Parameters erfasst werden, welcher einen Rückschluss auf die jeweilige Stärke des magnetischen Flusses zwischen dem Läufer und dem Ständer der Haupterregermaschine zulässt. Es können auch zwei oder mehrere entsprechende Erfassungseinrichtungen vorhanden sein.

Zum Regeln der Stromstärke des dem Läufer der Synchronmaschine zuführbaren Erregerstroms kann die Stelleinheit kommunikationstechnisch mit einer Regelelektronik verbunden sein, welche einen Ist-Stromstärke eines von der Synchronmaschine erzeugten Drehstroms mit einer vorgegebenen Soll-Stromstärke vergleicht, um eine Regelung der Stromstärke des dem Läufer der Synchronmaschine zuführbaren Erregerstroms durchzuführen. Alternativ kann die Stelleinheit selbst eine entsprechende Regelelektronik umfassen.

Bevorzugt weist die Stelleinheit wenigstens eine steuerbare Gleichrichtereinheit auf. Mittels einer solchen steuerbaren Gleichrichtereinheit kann sowohl die Gleichrichtung der von der Haupterregermaschine erzeugten Erregerdrehspannung als auch die Regelung der Stromstärke des dem Läufer der Synchronmaschine zuführbaren Erregerstroms vorgenommen werden. Hierzu kann die steuerbare Gleichrichtereinheit steuerbare Gleichrichter aufweisen.

Das erfindungsgemäße bürstenlose Erregersystem zum Versorgen von wenigstens einer Erregerwicklung eines Läufers einer Synchronmaschine, insbesondere eines Turbogenerators, mit einem Erregerstrom, umfasst:
- wenigstens eine als rotierende elektrische Außenpolmaschine ausgebildete Haupterregermaschine, die einen drehfest mit einer Läuferwelle der Synchronmaschine verbundenen Läufer mit Läuferwicklungen und einen Ständer mit Außenpolwicklungen aufweist, wobei die Läuferwicklungen elektrisch leitend mit der Erregerwicklung des Läufers der Synchronmaschine verbindbar sind;
- wenigstens eine als permanenterregte elektrische Innenpolmaschine ausgebildete Hilfserregermaschine, die einen drehfest mit der Läuferwelle der Synchronmaschine verbundenen Läufer mit Permanentmagneten und einen Ständer mit Ständerwicklungen aufweist, wobei die Ständerwicklungen elektrisch leitend mit den Außenpolwicklungen der Haupterregermaschine verbindbar sind; und
- wenigstens eine Regeleinrichtung gemäß einer der vorgenannten Ausgestaltungen oder einer beliebigen Kombination derselben.
Mit dem bürstenlosen Erregersystem sind die oben mit Bezug auf die Regeleinrichtung genannten Vorteile und Ausführungsformen entsprechend verbunden. Die Läuferwicklungen der Haupterregermaschine sind über die drehfest mit der Läuferwelle der Synchronmaschine verbundene Stelleinheit, insbesondere einen mitrotierenden Gleichrichter, elektrisch leitend mit der Erregerwicklung des Läufers der Synchronmaschine verbindbar. Die Ständerwicklungen der Hilfserregermaschine sind über ein Stellglied elektrisch leitend mit den Außenpolwicklungen der Haupterregermaschine verbindbar.

Das erfindungsgemäße Verfahren zum Versorgen von wenigstens einer Erregerwicklung eines Läufers einer Synchronmaschine, insbesondere eines Turbogenerators, mit einem Erregerstrom, umfasst die Schritte:
- Erzeugen einer konstanten Erregerdrehspannung mittels einer Haupterregermaschine, deren Läufer drehfest mit dem Läufer der Synchronmaschine verbunden ist;
- Erzeugen des Erregerstroms durch Gleichrichten der konstanten Erregerdrehspannung mittels einer Stelleinheit, die drehfest mit dem Läufer der Synchronmaschine verbunden ist; und
- Regeln der Stromstärke des Erregerstroms mittels der Stelleinheit.
Mit diesem Verfahren sind die oben mit Bezug auf die Regeleinrichtung genannten Vorteile entsprechend verbunden. Insbesondere kann die Regeleinrichtung zur Durchführung des Verfahrens eingerichtet sein.

Als Stelleinheit wird bevorzugt wenigstens eine steuerbare Gleichrichtereinheit verwendet. Mittels einer solchen steuerbaren Gleichrichtereinheit kann sowohl die Gleichrichtung der von der Haupterregermaschine erzeugten Erregerdrehspannung als auch die Regelung der Stromstärke des dem Läufer der Synchronmaschine zuführbaren Erregerstroms vorgenommen werden. Hierzu kann die steuerbare Gleichrichtereinheit steuerbare Gleichrichter aufweisen.

Bevorzugt wird die konstante Erregerdrehspannung durch eine Regelung einer Versorgung der Haupterregermaschine mit einem von einer Hilfserregermaschine generierten, gleichgerichteten Hilfserregerdrehstrom erzeugt. Dies impliziert einen konstanten magnetischen Fluss zwischen dem Läufer und der Ständer der Haupterregermaschine.

Im Folgenden werden bevorzugte Ausführungsformen des erfindungsgemäßen bürstenlosen Erregersystems anhand der beigefügten schematischen Zeichnungen erläutert. Es zeigen:
- Fig. 1: eine schematische Darstellung eines mit einem Turbogenerator kombinierten herkömmlichen bürstenlosen Erregersystems;
- Fig. 2: eine schematische Darstellung eines Ausführungsbeispiels für ein mit einer Synchronmaschine kombiniertes erfindungsgemäßes bürstenloses Erregersystem; und
- Fig. 3: eine schematische und perspektivische Darstellung einer Haupterregermaschine eines Ausführungsbeispiels für ein erfindungsgemäßes bürstenloses Erregersystem.

In den Figuren sind funktionsgleiche Bauteile mit denselben Bezugszeichen versehen.

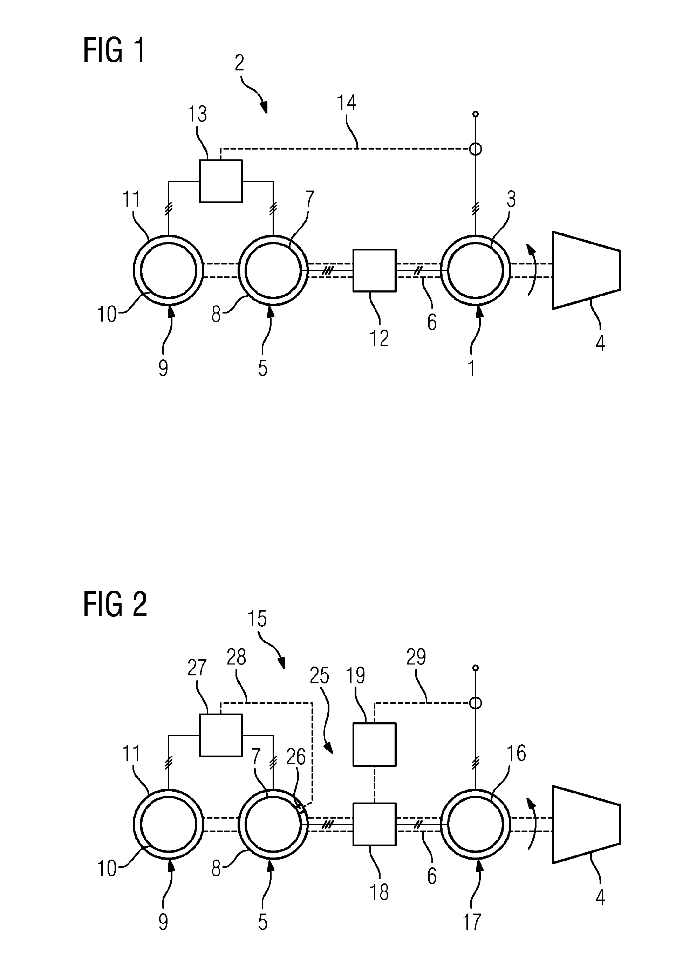

Figur 1 zeigt eine schematische Darstellung eines mit einem Turbogenerator 1 kombinierten herkömmlichen bürstenlosen Erregersystems 2 zum Versorgen von wenigstens einer nicht gezeigten Erregerwicklung eines Läufers 3 des Turbogenerators 1 mit einem Erregerstrom. Der Turbogenerator 1 ist mit einer Turbine 4 zu einem Turbosatz kombiniert.

Das Erregersystem 2 umfasst eine als rotierende elektrische Außenpolmaschine ausgebildete Haupterregermaschine 5, die einen drehfest mit einer Läuferwelle 6 des Turbogenerators 1 verbundenen Läufer 7 mit nicht gezeigten Läuferwicklungen und einen Ständer 8 mit nicht gezeigten Außenpolwicklungen aufweist, wobei die Läuferwicklungen elektrisch leitend mit der Erregerwicklung des Läufers 3 des Turbogenerators 1 verbindbar sind.

Des Weiteren umfasst das Erregersystem 2 eine als permanenterregte elektrische Innenpolmaschine ausgebildete Hilfserregermaschine 9, die einen drehfest mit der Läuferwelle 6 des Turbogenerators 1 verbundenen Läufer 10 mit nicht gezeigten Permanentmagneten und einen Ständer 11 mit nicht gezeigten Ständerwicklungen aufweist, wobei die Ständerwicklungen elektrisch leitend mit den Außenpolwicklungen des Ständers 8 der Haupterregermaschine 5 verbindbar sind.

Das Erregersystem 2 umfasst zudem eine drehfest mit der Läuferwelle 6 verbundene, zwischen die Läuferwicklungen des Läufers 7 der Haupterregermaschine 5 und die Erregerwicklung des Läufers 3 des Turbogenerators 1 geschaltete, zum nicht steuerbaren bzw. passiven Gleichrichten einer von der Haupterregermaschine 5 erzeugten Drehspannung eingerichtete Gleichrichtereinheit 12. Die Gleichrichtereinheit 12 weist hierzu nicht steuerbare, nicht gezeigte Gleichrichter in Form von miteinander verschalteten Dioden auf.

Die Hilfserregermaschine 9 erzeugt einen Hilfserregerdrehstrom, dessen Stromstärke mittels eines Reglers 13 geregelt und gleichgerichtet wird, um der Haupterregermaschine 5 bzw. deren Außenpolwicklungen einen Hilfserregergleichstrom zuzuführen. Der Regler 13 regelt die Stromstärke des der Haupterregermaschine 5 zuzuführenden Hilfserregergleichstroms und hierdurch die Stromstärke des den Erregerwicklungen des Läufers 3 des Turbogenerators 1 zuzuführenden Erregerstroms in Abhängigkeit eines von dem Turbogenerator 1 zu erzeugenden Drehstroms, was durch die gestrichelte Linie 14 in Figur 1 angedeutet sein soll.

Figur 2 zeigt eine schematische Darstellung eines Ausführungsbeispiels für ein erfindungsgemäßes bürstenloses Erregersystem 15 zum Versorgen von wenigstens einer nicht gezeigten Erregerwicklung eines Läufers 16 einer Synchronmaschine 17 mit einem Erregerstrom. Die Synchronmaschine 17 ist mit einer Turbine 4 zu einem Turbosatz kombiniert.

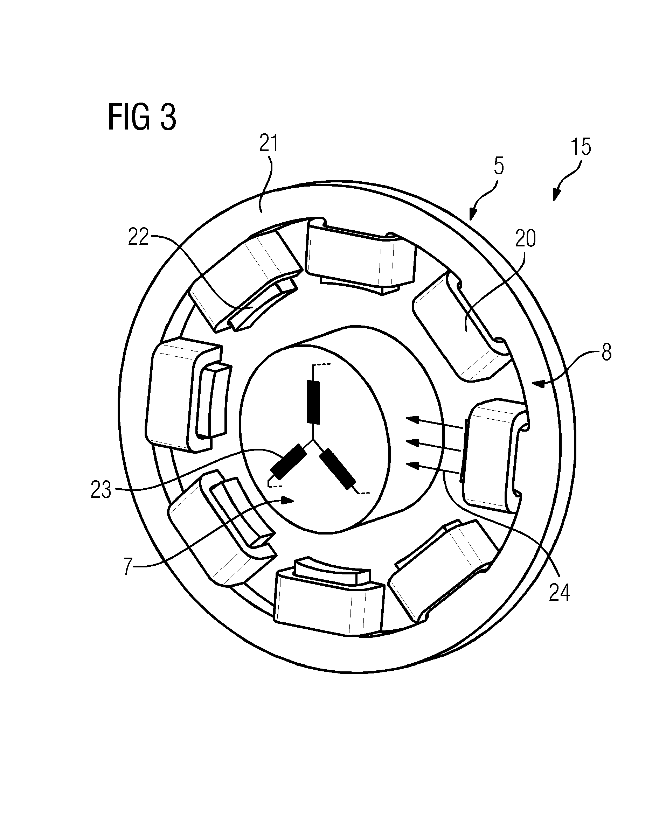

Das bürstenlose Erregersystem 15 umfasst eine als rotierende elektrische Außenpolmaschine ausgebildete Haupterregermaschine 5, die einen drehfest mit einer Läuferwelle 6 der Synchronmaschine 17 verbundenen Läufer 7 mit nicht gezeigten Läuferwicklungen und einen Ständer 8 mit nicht gezeigten Außenpolwicklungen aufweist. Die Läuferwicklungen sind elektrisch leitend mit der Erregerwicklung des Läufers 16 der Synchronmaschine 17 verbindbar. Eine beispielhafte Ausführungsform einer Haupterregermaschine 5 ist in Figur 3 gezeigt.

Des Weiteren umfasst das bürstenlose Erregersystem 15 eine als permanenterregte elektrische Innenpolmaschine ausgebildete Hilfserregermaschine 9, die einen drehfest mit der Läuferwelle 6 der Synchronmaschine 17 verbundenen Läufer 10 mit nicht gezeigten Permanentmagneten und einen Ständer 11 mit nicht gezeigten Ständerwicklungen aufweist. Die Ständerwicklungen sind elektrisch leitend mit den Außenpolwicklungen der Haupterregermaschine 5 verbindbar.

Ferner umfasst das bürstenlose Erregersystem 15 eine Regeleinrichtung 25.

Die Regeleinrichtung 25 umfasst eine zum Erfassen einer Stärke eines zwischen dem Läufer 7 und dem Ständer 8 der Haupterregermaschine 5 erzeugten magnetischen Flusses oder eines mit diesem magnetischen Fluss verbundenen Parameters eingerichtete Erfassungseinrichtung 26.

Des Weiteren umfasst die Regeleinrichtung 25 eine zwischen die Hilfserregermaschine 9 und die Haupterregermaschine 5 geschaltete Regeleinheit 27, die zum Erzeugen eines der Haupterregermaschine 5 zuführbaren Hilfserregergleichstroms durch Gleichrichten eines von der Hilfserregermaschine 9 erzeugten Hilfserregerdrehstroms eingerichtet ist und die eingerichtet ist, die Stromstärke des Hilfserregergleichstroms derart zu regeln, dass ein zwischen dem Läufer 7 und dem Ständer 8 der Haupterregermaschine 5 erzeugter magnetischer Fluss unabhängig von der Stromstärke des der Erregerwicklung des Läufers 16 der Synchronmaschine 17 zuführbaren Erregerstroms konstant gehalten wird.

Ferner umfasst die Regeleinrichtung 25 eine drehfest mit der Läuferwelle 6 der Synchronmaschine 17 verbundene, zwischen den Läufer 7 der Haupterregermaschine 5 und die Erregerwicklung des Läufers 16 der Synchronmaschine 17 geschaltete Stelleinheit 18, die zum Erzeugen des Erregerstroms durch Gleichrichten einer von der Haupterregermaschine 5 erzeugten Erregerdrehspannung und zum Regeln der Stromstärke des dem Läufer 16 der Synchronmaschine 17 zuführbaren Erregerstroms eingerichtet ist. Hierzu ist die Stelleinheit 18 kommunikationstechnisch mit einer Regelelektronik 19 verbunden. Die Stelleinheit 18 umfasst wenigstens eine nicht gezeigte steuerbare Gleichrichtereinheit.

Die Hilfserregermaschine 9 erzeugt einen Hilfserregerdrehstrom, welcher mittels der Regeleinheit 27 geregelt und gleichgerichtet wird, um der Haupterregermaschine 5 bzw. deren Außenpolwicklungen einen Gleichstrom zuzuführen. Die Regeleinheit 27 regelt die Stromstärke eines der Haupterregermaschine 5 zuführbaren Hilfserregergleichstroms in Abhängigkeit der Stärke eines von der Erfassungseinrichtung 26 erfassten magnetischen Flusses zwischen dem Läufer 7 und dem Ständer 8 der Haupterregermaschine 5, was durch die gestrichelte Linie 28 angedeutet sein soll. Die Regelelektronik 19 steuert die Stelleinheit 18 in Abhängigkeit der Stromstärke eines von der Synchronmaschine 17 zu erzeugenden Drehstroms an, was durch die gestrichelte Linie 29 in Figur 2 angedeutet sein soll.

Figur 3 zeigt eine schematische und perspektivische Darstellung einer Haupterregermaschine 5 eines Ausführungsbeispiels für ein erfindungsgemäßes bürstenloses Erregersystem 15. Der Ständer 8 der Haupterregermaschine 5 umfasst acht Außenpolwicklungen 20, welche über einen gemeinsamen, kreisringförmig ausgebildeten Eisenkörper 21 verbunden sind, wozu an dem Eisenkörper 21 radial nach innen verlaufende Vorsprünge 22 ausgebildet sind, welche durch die Außenpolwicklungen 20 greifen. Die Haupterregermaschine 5 weist zudem einen Läufer 7 mit drei durch ihre Induktivitäten angedeuteten Läuferwicklungen 23 auf. Beim Betrieb des Erregersystems 15 wird in der Haupterregermaschine 5 zwischen den Außenpolwicklungen 20 und den Läuferwicklungen 23 ein Magnetfeld erzeugt, welches durch die Pfeile 24 angedeutet ist. Mit einem erfindungsgemäßen Erregersystem 15 kann der mit diesem Magnetfeld zusammenhängende magnetische Fluss unabhängig von einer Stromstärke des der Erregerwicklung des Läufers 16 der Synchronmaschine 17 zuzuführenden Erregerstroms konstant gehalten werden.

Obwohl die Erfindung im Detail durch die bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Regeleinrichtung (25) für ein bürstenloses Erregersystem (15) zum Versorgen von wenigstens einer Erregerwicklung eines Läufers (16) einer Synchronmaschine (17), insbesondere eines Turbogenerators, mit einem Erregerstrom, aufweisend:
- wenigstens eine zum Erfassen einer Stärke eines zwischen einem Läufer (7) und einem Ständer (8) einer Haupterregermaschine (5) erzeugten magnetischen Flusses oder eines mit diesem magnetischen Fluss verbundenen Parameters eingerichtete Erfassungseinrichtung (26);
- wenigstens eine zwischen eine Hilfserregermaschine (9) und die Haupterregermaschine (5) schaltbare Regeleinheit (27), die zum Erzeugen eines der Haupterregermaschine (5) zuführbaren Hilfserregergleichstroms durch Gleichrichten eines von der Hilfserregermaschine (9) erzeugten Hilfserregerdrehstroms eingerichtet ist und die eingerichtet ist, die Stromstärke des Hilfserregergleichstroms derart zu regeln, dass ein zwischen dem Läufer (7) und dem Ständer (8) der Haupterregermaschine (5) erzeugter magnetischer Fluss unabhängig von der Stromstärke des der Erregerwicklung des Läufers (16) der Synchronmaschine (17) zuführbaren Erregerstroms konstant gehalten wird; und
- wenigstens eine drehfest mit einer Läuferwelle (6) der Synchronmaschine (17) verbundene, zwischen den Läufer (7) der Haupterregermaschine (5) und die Erregerwicklung des Läufers (16) der Synchronmaschine (17) geschaltete Stelleinheit (18), die zum Erzeugen des Erregerstroms durch Gleichrichten einer von der Haupterregermaschine (5) erzeugten Erregerdrehspannung und zum Regeln der Stromstärke des dem Läufer (16) der Synchronmaschine (17) zuführbaren Erregerstroms eingerichtet ist.

2. Regeleinrichtung (25) gemäß Anspruch 1,
wobei die Stelleinheit (18) wenigstens eine steuerbare Gleichrichtereinheit aufweist.

3. Bürstenloses Erregersystem (15) zum Versorgen von wenigstens einer Erregerwicklung eines Läufers (16) einer Synchronmaschine (17), insbesondere eines Turbogenerators, mit einem Erregerstrom, aufweisend:
- wenigstens eine als rotierende elektrische Außenpolmaschine ausgebildete Haupterregermaschine (5), die einen drehfest mit einer Läuferwelle (6) der Synchronmaschine (17) verbundenen Läufer (7) mit Läuferwicklungen (23) und einen Ständer (8) mit Außenpolwicklungen (20) aufweist, wobei die Läuferwicklungen (23) elektrisch leitend mit der Erregerwicklung des Läufers (16) der Synchronmaschine (17) verbindbar sind;
- wenigstens eine als permanenterregte elektrische Innenpolmaschine ausgebildete Hilfserregermaschine (9), die einen drehfest mit der Läuferwelle (6) der Synchronmaschine (17) verbundenen Läufer (10) mit Permanentmagneten und einen Ständer (11) mit Ständerwicklungen aufweist, wobei die Ständerwicklungen elektrisch leitend mit den Außenpolwicklungen (20) der Haupterregermaschine (5) verbindbar sind; und
- wenigstens eine Regeleinrichtung (25) gemäß Anspruch 1 oder 2.

4. Verfahren zum Versorgen von wenigstens einer Erregerwicklung eines Läufers (16) einer Synchronmaschine (17), insbesondere eines Turbogenerators, mit einem Erregerstrom, aufweisend die Schritte:
- Erzeugen einer konstanten Erregerdrehspannung mittels einer Haupterregermaschine (5), deren Läufer (7) drehfest mit dem Läufer (16) der Synchronmaschine (17) verbunden ist;
- Erzeugen des Erregerstroms durch Gleichrichten der konstanten Erregerdrehspannung mittels einer Stelleinheit (18), die drehfest mit dem Läufer (16) der Synchronmaschine (17) verbunden ist; und
- Regeln der Stromstärke des Erregerstroms mittels der Stelleinheit (18).

5. Verfahren gemäß Anspruch 4,
wobei als Stelleinheit (18) wenigstens eine steuerbare Gleichrichtereinheit verwendet wird.

6. Verfahren gemäß Anspruch 3 oder 4,
wobei die konstante Erregerdrehspannung durch eine Regelung einer Versorgung der Haupterregermaschine (5) mit einem von einer Hilfserregermaschine (9) generierten, gleichgerichteten Hilfserregerdrehstrom erzeugt wird.
